# EUROPEAN PATENT APPLICATION

(11) **EP 2 224 316 A1**
(43) Date of publication of application: **01.09.2010**
(21) Application number: 09153828.0
(22) Date of filing: 26.02.2009
(51) Int. Cl.: G06F 3/033, G06F 3/048

(54) **Method for and apparatus for display scrolling**

(71) Applicant: RESEARCH IN MOTION LIMITED, Waterloo, Ontario N2L 3W8 (CA)
(72) Inventor: Moosavi, Vahid, Waterloo Ontario N2L 3W8 (CA)
(74) Representative: MERH-IP Matias Erny Reichl Hoffmann

(57) **Abstract**

An electronic device comprising a display for displaying an image that exceeds the dimensions of the display, a multi-directional input device for navigating the image on the display, at least one button input device on each of opposite sides of the multi-directional input, a touch sensor adjacent and underlying the multi-directional input device and the button input devices for sensing touch adjacent the multi-directional input device and the button input devices and in response generating an output signal, and a processor for receiving the output signal and scrolling the image responsive to the touch sensor sensing touch that commences adjacent the multi-directional input device and moves toward the button input device.

## Description

### Technical Field

The instant disclosure is directed toward portable electronic devices, and more particularly, to a method and apparatus for scrolling images that exceed the dimensions of a display.

### Background

Electronic devices, such as desktop computers or portable electronic devices (e.g. cellular telephones, smart telephones, wireless PDAs, and laptop computers with wireless 802.11 or Bluetooth capabilities) incorporate various navigation components for user navigation and selection of screen icons to launch applications, make menu selection, etc. For example, track wheels and trackballs are commonly used in mobile communication devices while touch pads and miniature joystick devices are commonly used in laptop computers.

Users of such devices have been known to experience difficulty reading internet pages and documents that are wider than the display screen of the mobile communication device, because the user must constantly scroll back and forth in order to view the on-screen image. Various input devices are known for scrolling, such as touch pads (e.g. Synaptics™ Touchpad, touch sensitive screens for "flick" scrolling in iPhone™/iPod™ devices, etc.), as discussed above.

### Summary

According to an aspect of this specification, there is provided an electronic device comprising a display for displaying an image that exceeds the dimensions of the display; a multi-directional input device for navigating said image on said display; at least one button input device on each of opposite sides of said multi-directional input; a touch sensor adjacent and underlying said multi-directional input device and said at least one button input device for sensing touch adjacent said multi-directional input device and said at least one button input device and in response generating an output signal; and a processor for receiving said output signal and scrolling said image in the direction of said at least one button input device responsive to said touch sensor sensing touch that commences adjacent said multi-directional input device and moves toward said at least one button input device.

According to another aspect, there is provided a method of A method of operating an electronic device having a display, a multi-directional input device, at least one button input device on each of opposite sides of said multi-directional input, a touch sensor adjacent and underlying said multi-directional input device and said at least one button input device, and a processor, comprising displaying an image that exceeds the dimensions of the display; sensing touch adjacent said multi-directional input device and said at least one button input device via said touch sensor and in response generating an output signal; and receiving said output signal at said processor and scrolling said image in the direction of said at least one button input device responsive to said touch sensor sensing touch that commences adjacent said multi-directional input device and moves toward said at least one button input device.

### Brief Description of Drawings

FIG. 1 is a simplified block diagram of a wireless communication system;

FIG. 2 is a block diagram of components of a portable electronic device;

FIGS. 3A and 3B show the portable electronic device in FIG. 2 displaying a web page having dimensions that exceed the dimensions of the device display;

FIG. 4 shows details of a trackball of the portable electronic device in FIG. 2 and FIGS. 3A and 3B;

FIG. 5 is an exploded view of the portable electronic device in FIG. 2 and FIGS. 3A and 3B;

FIG. 6 shows a touch sensor of the portable electronic device in FIG. 2 and FIGS. 3A and 3B, according to an exemplary embodiment;

FIG. 7 is a flowchart showing a method of browsing documents and pages that exceed the dimensions of a display;

### Description of Preferred Embodiments

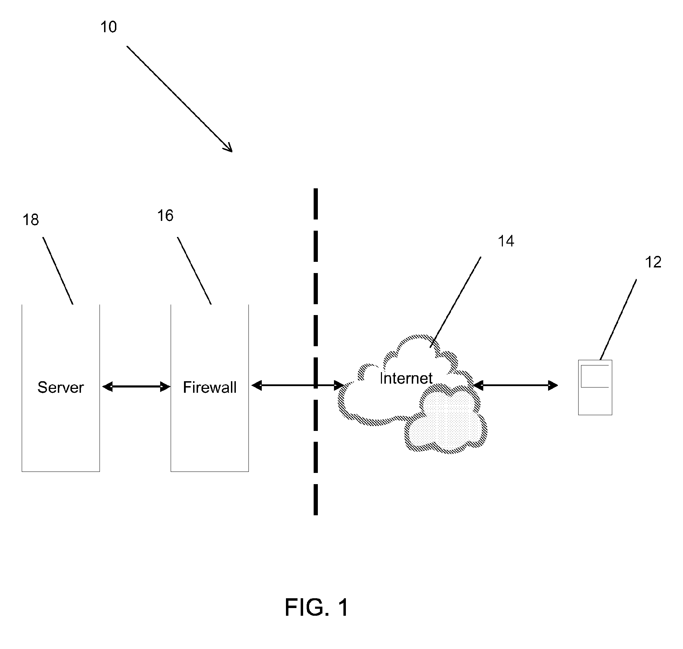

FIG. 1 is a simplified block diagram of an exemplary communication system 10 for a portable electronic device 12. According to the illustrated embodiment, the portable electronic device 12 is operable to effect communications over a radio communications channel and communicates with a base station (not shown) while located within a coverage area that is defined by the base station. However, the portable electronic device 12 is not limited to a device capable of effecting communications. Indeed, the exemplary method of navigating and selecting screen items set forth in greater detail below, may advantageously be implemented within a multitude of devices, some of which are capable of communications and others of which are not (e.g. PDAs, mobile phones, smart telephones, laptop computers, electronic games, GPS receivers, etc.).

In the illustrated embodiment, the base station is part of a wireless network that is in communication with the Internet 14. Data is delivered to the portable electronic device 12 via wireless transmission from the base station. Similarly, data is sent from the portable electronic device 12 via wireless transmission to the base station.

It will be appreciated that the portable electronic device 12 of FIG. 1 is movable within a coverage area of the base station and can be moved to coverage areas defined by other base stations. Further, as will be understood by one of ordinary skill in the art, wireless networks include GSM/GPRS, CDPD, TDMA, iDEN, Mobitex, DataTAC networks, EDGE, EVDO or UMTS and broadband networks such as Bluetooth and variants of 802.11.

A server 18 handles wireless client requests from the portable electronic device 12. In the embodiment shown, a firewall16 is provided between the server 18 and the Internet 14, although in other embodiments server 18 may connect to the Internet 14 directly. The server 18 further operates as a Mail Server, which communicates with an email client of the portable electronic device 12 to allow a user to send and receive email messages.

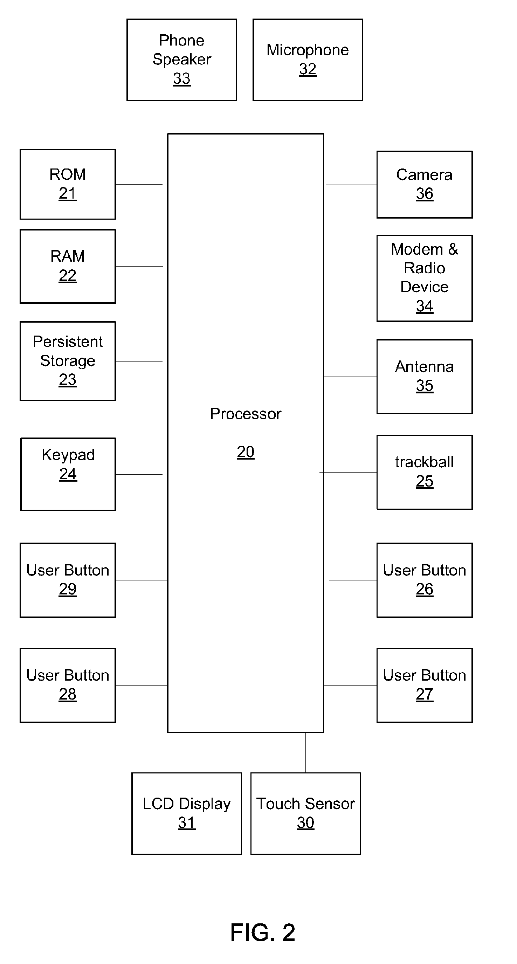

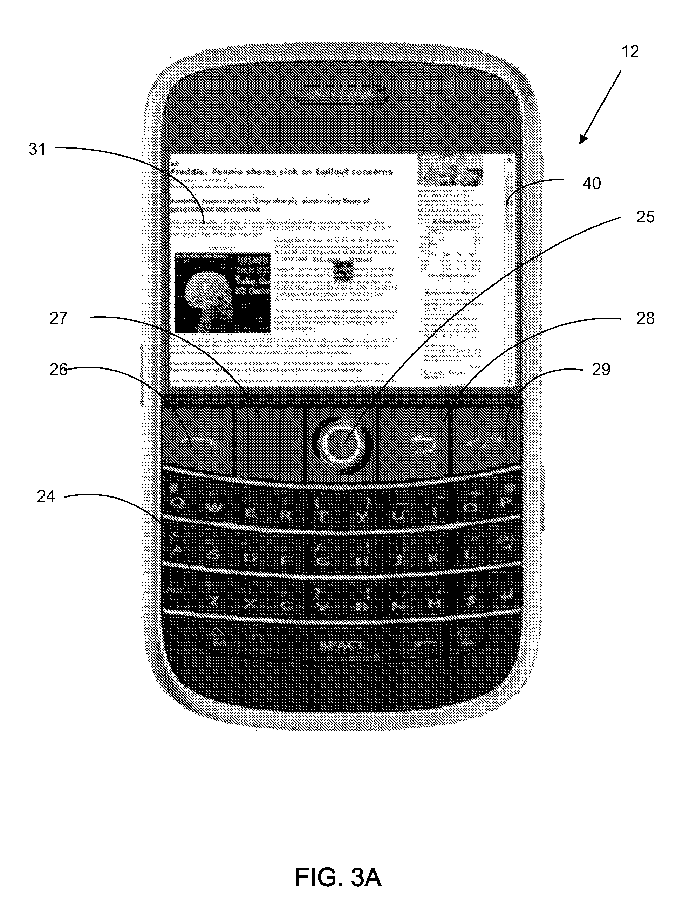

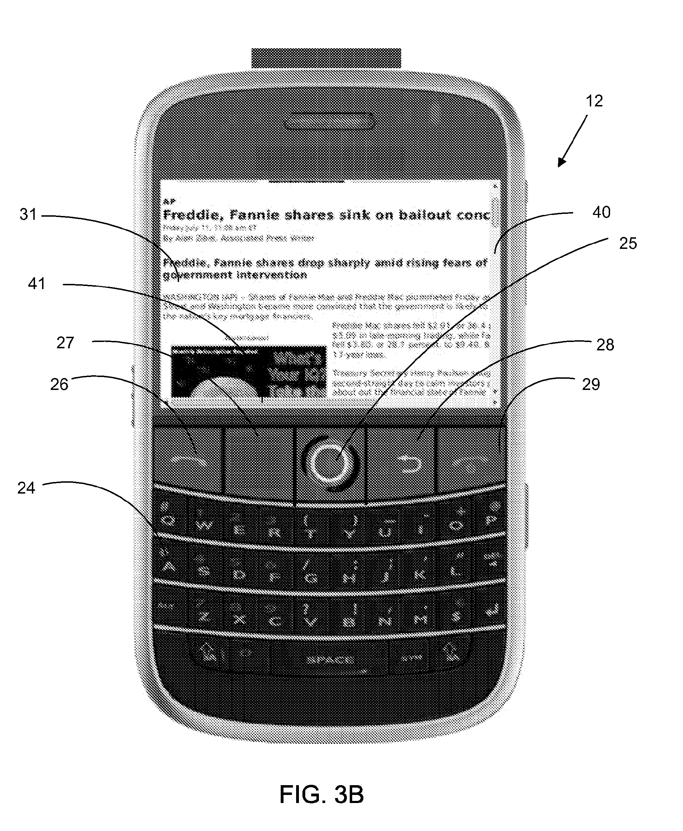

FIG. 2 is a block diagram showing certain components within an exemplary embodiment of the portable electronic device 12. The portable electronic device 12 includes a processor 20 connected to a read-only-memory (ROM) 21 that contains a plurality of applications executable by the processor 20 for enabling each portable electronic device 12 to perform certain functions including, for example, Personal Identification Number (PIN) message functions, Short Message Service (SMS) message functions, address book and calendaring functions, camera functions, and cellular telephone functions. More particularly, processor 20 may execute applications within ROM 21 for notifying the user of events such as incoming calls and/or emails, appointments, tasks, etc. The processor 20 is also connected to a random access memory unit (RAM) 22 and a persistent storage device 23 to facilitate various non-volatile storage functions of the portable electronic device 12. The processor 20 receives input from one or more input devices, including a keypad 24, a multi-directional device such as a trackball 25, shown in greater detail with reference to FIG. 3, and various user button interfaces (hereinafter "buttons") 26 - 29, also shown in greater detail with reference to FIG. 3. According to an exemplary embodiment, a further input device, such as a touch sensor 30, is provided for operation in conjunction with the trackball 25 and user buttons 26 - 29, as described in greater detail below.

The processor 20 outputs to one or more output devices, including a Liquid Crystal Display (LCD) display 31. A microphone 32 and phone speaker 33 are connected to the processor 20 for cellular telephone functions. The processor 20 is also connected to a modem and radio device 34. The modem and radio device 34 is used to connect to wireless networks and transmit and receive voice and data communications through an antenna 35. A camera 36 provides functionality for taking pictures that can be viewed on display 31, sent to other users via wireless email, saved to persistent storage 23 for later viewing, etc.

As shown in FIG. 3A, images of web pages/documents are often longer than the display 31 of portable electronic device 12 such that a vertical scroll bar 40 must be used to browse the image. Moreover, in many cases the image of the web pages/document must be magnified (i.e. via a zoom feature of the device 12) to a sufficient size that the text becomes readable, or other details of the document become discernable, as shown in FIG. 3B. However, when magnified the image of the web pages/document often also becomes wider than the width of the display 31, requiring the use of a horizontal scroll bar 41 to be used. Specifically, in order to browse an entire line of text the scroll bar 41 must be moved to the right until the end of the line is reached, and then moved all the way back to the far left in order to start reading the next line. This procedure must be repeated for each line of text, which can be time consuming and tiresome.

As discussed briefly in connection with FIG. 2, a touch sensor 30 can be provided as an additional input to the device 12. The term "touch sensor" as used in this specification includes conventional capacitive and resistive touch sensors that operate responsive to being physically contacted, as well as proximity sensors (e.g. capacitive, magnetic, inductive, photosensitive, sonar-based, passive thermal infrared, etc.) that operate responsive to the presence of nearby objects without any physical contact.

According to an exemplary embodiment, touch sensor 30 may be a capacitive proximity sensor disposed under the user buttons 26 and 27 on one side of trackball 25 and buttons 28 and 29 on the opposite side of trackball 25 such that finger movement over the buttons 26 - 29 may be sensed. Since such touch sensors (i.e. capacitive proximity sensors) do not require direct touch in order to be activated, the buttons 26 - 29 may continue to function as mechanical function selection buttons while also acting as a surface for the touch sensor 30.

In a first alternative embodiment, it is contemplated that no mechanical buttons 26 - 29 are provided whatsoever. In this embodiment, touch sensor 30 (e.g. a conventional capacitive or resistive touch sensor) replaces the function of buttons 26 - 29 to detect finger 'taps' in regions indicated on the device (e.g. regions similar to those occupied by the buttons 26 - 29 in the illustrated embodiment), for the purpose of activating associated functions of the device (e.g. escape function, cancel function, call function, etc.).

In a second alternative embodiment, it is contemplated that touch sensor(s) 30 may be disposed in areas between (rather than under) the user buttons 26 and 27 on one side of trackball 25 and between (rather than under) buttons 28 and 29 on the opposite side of trackball 25

In operation, scroll bar 41 (and therefore the entire page being displayed) is caused to move left or right responsive to touch sensor 30 sensing left or right moving finger strokes across the buttons 26 - 29 (or across the regions designated for button operation or between the buttons 26 - 29, in accordance with the alternative embodiments). As indicated above, buttons 26 - 29 retain their conventional functionality such that depressing a button (or tapping a button region) results in activating an associate function

In order to prevent accidental movement of the scroll bar when one of the buttons 26 - 29 is depressed (or the button region tapped) to activate an associated function, according to the exemplary embodiment scroll bar movement only occurs when the finger stroke commences as a continuation of trackball movement (i.e. while trackball 25 is moving and/or when the finger stroke commences in the area between buttons 27 and 28 and continues either over button 27 on one side of trackball 25 or button 28 on the opposite side of trackball 25).

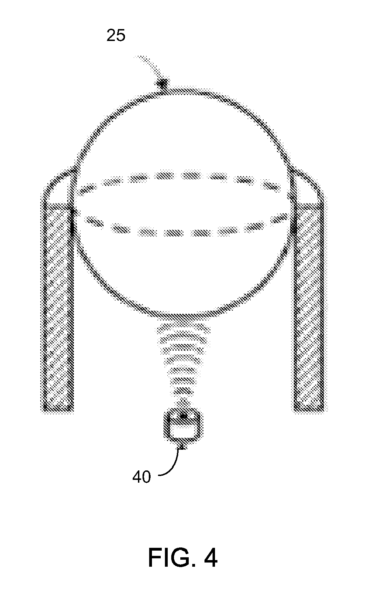

Turning briefly to FIG. 4, details of an exemplary trackball 25 are shown. Motion of the trackball 150 is assessed using at least one sensor 40, and preferably a plurality of sensors (not shown). For example, a pair of sensors (such as sensor 40) may be located about the trackball 25 for sensing rotational motion of the trackball which is representative of the desired direction the user would like the cursor to move on the screen. The trackball itself is capable of free rotation within its receiving socket. In one embodiment, each of the sensors 40 is a Hall Effect sensor located proximate the trackball 25 for generating signal pulses indicative of incremental rolling motion of the trackball, which is translated into linear cursor movement using pattern recognition software..

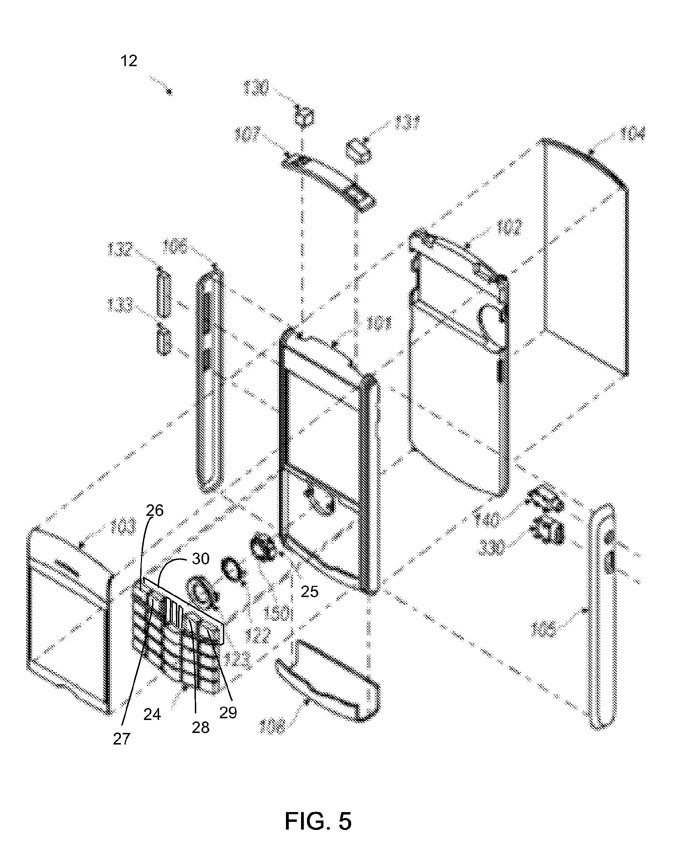

FIG. 5 is an exploded view showing some of the typical components found in the assembly of the portable electronic device 12. The construction of the device benefits from various manufacturing simplifications. The internal components are constructed on a single PCB (printed circuit board) 102. The keyboard 332 is constructed from a single piece of material, and in a preferred embodiment is made from plastic. The keyboard 332 sits over dome switches (not shown) located on the PCB 102 in a preferred embodiment. One switch is provided for every key on the keyboard in the preferred embodiment, but in other embodiments more than one switch or less than one switch per key are possible configurations. The support frame 101 holds the keyboard 24 and trackball 25 in place above the PCB 102. The support frame 101 also provides an attachment point for the display (not shown). A lens 103 covers the display to prevent damage. When assembled, the support frame 101 and the PCB 102 are fixably attached to each other and the display is positioned between the PCB 102 and support frame 101.

The trackball 25 is frictionally engaged with the support frame 101, but in a preferred embodiment is also removable when the device is assembled. This allows for replacement of the trackball 25 if or when it becomes damaged. Removal of the ball from trackball 25 is enabled through the use of an outer removable ring 123 and an inner removable ring 122. These rings 122, 123 ensure that the trackball assembly and the ball are properly held in place against the support frame 101.

A serial port (preferably a Universal Serial Bus port) 330 and an earphone jack 140 are fixably attached to the PCB 102 and further held in place by right side element 105. Buttons 130-133 are attached to switches (not shown), which are connected to the PCB 102.

Final assembly involves placing the top piece 107 and bottom piece 108 in contact with support frame 101. Furthermore, the assembly interconnects right side element 105 and left side element 106 with the support frame 101, PCB 102, and lens 103. These side elements 106, 105 provide additional protection and strength to the support structure of the device 12. In a preferred embodiment, backplate 104 is removably attached to the other elements of the device.

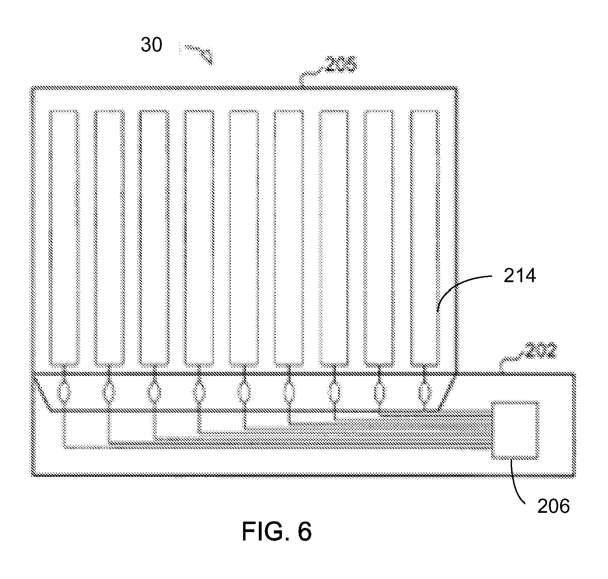

As discussed briefly above, and in greater detail with reference to FIG. 6, a touch sensor 30 is disposed between buttons 26 - 29 and support frame 101, for sensing finger stroke movement. The touch sensor device 30 includes a flexible circuit substrate 202 and a sensor component 204.

In the illustrated embodiment, the flexible circuit substrate 202 includes a touch sensor controller 206, the touch sensor controller 206 coupled to a plurality of columnar sensing elements 214 for detecting an object proximate to the sensing elements 214. When assembled together and in operation, the touch sensor device 30 detects objects (e.g. human finger, plastic or metallic stylus, etc.) that are proximate to the sensing elements 214 and controller 206 processes and communicates information via output signals regarding the position and/or motion of the proximate object. Specifically, in the illustrated embodiment sensing elements 214 function as capacitors whose charge is measured by the controller 206. However, as discussed above, various types of proximity sensors are known in the art for the detection of different types of objects (e.g. capacitive, magnetic, inductive, photocell (reflective), sonar (active or passive), passive thermal infrared, passive optical, etc.)

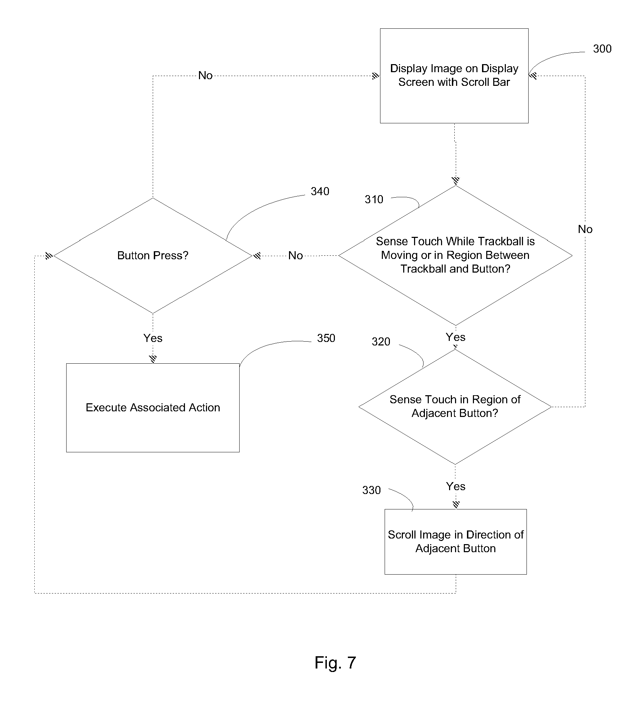

Turning now to FIG. 7, an image (e.g. of a web page or document) having at least one dimension (i.e. length or width) that exceeds the dimension(s) of display 25, is displayed with scroll bars (300), as shown in FIGS. 3A and 3B. In the event that touch sensor 30 senses touch in the area between buttons 27 and 28 (310) and thereafter senses touch over button 27 or button 28 (320) then the image is scrolled in the direction of button 27 or button 28, respectively (330). However, in the event of a button press (340) the action associated with the button 26 - 29 is executed (350).

Several different modes of touch sensor navigation are contemplated, including an absolute navigation mode wherein the touch stroke 320 is continuous and ends at the distal edge of one of either button 26 or button 29, in which case the image is scrolled fully to the left or to the right, respectively, and a relative navigation mode wherein the touch stroke 320 moves toward one of either button 26 or button 29 but stops before reaching the distal edge of either button. Several alternative embodiments of relative navigation mode are contemplated, as follows:

Linear, non-auto-repetitive navigation results in signal pulses being output to processor 20 by the touch sensor 30 as the touch stroke moves to the left or to the right from trackball 25, resulting in movement of the image (left or right) directly proportional to the motion of the touch stroke, such that when the touch stroke stops moving (i.e. the user's finger is held steady) the image stops moving and when the touch stroke begins moving again the image also moves again in proportion thereto.

Linear, auto-repetitive navigation operates in a manner similar to linear, non-auto-repetitive navigation except that when the touch stroke stops moving (i.e. the user's finger is held steady) the image stops moving but after a predetermined time period begins scrolling again at a constant speed as long as the touch continues to be sensed.

Exponential, non-auto-repetitive navigation operates in a manner similar to linear, non-auto-repetitive navigation except that the speed of movement of the image is a function of the distance between the sensed touch area and trackball 25.

Exponential, auto-repetitive navigation operates in a manner similar to linear, auto-repetitive navigation except that the speed of movement of the image is a function of the distance between the sensed touch area and trackball 25.

From the foregoing, it will be appreciated that the exemplary method and apparatus for scrolling of images that exceed the dimensions of display 31 relies upon the combined action of two input methods (e.g. trackball and touch sensor) and the touch-sensitive area includes buttons for activating features while the images are being scrolled.

According to an alternative embodiment, rather than horizontally orienting the touch sensor 30 for left/right scrolling it is contemplated that the touch sensor 30 may be oriented vertically for up/down scrolling, or may include both horizontal columnar sensing elements as well as vertical sensing elements 214 for two-dimensional (e.g. X-axis and Y-axis) touch sensing for control of both horizontal and vertical image scrolling.

Although the exemplary embodiment utilizes trackball 25 as a multi-directional input device, it is contemplated that other multi-directional devices may be used such as joysticks, +-shaped buttons, etc.

The above embodiments are for illustration, and although one or more particular embodiments of the device and method have been described herein, changes and modifications may be made thereto without departing from the disclosure in its broadest aspects and as set forth in the following claims.

## Claims

1. An electronic device (12) adapted to display an image having dimensions that exceed those of a display (31) of said electronic device, said electronic device comprising:
said display (31);
a multi-directional input device (25) for navigating on said display an image having dimensions exceeding those of the display;
at least one button (26 - 29) on each of opposite sides of said multi-directional input device (25);
a touch sensor (30) for sensing touch adjacent said multi-directional input device and said at least one button and in response generating an output signal; and
a processor (20) for receiving said output signal and scrolling said image in the direction of said at least one button (26 - 29) responsive to said touch sensor (30) sensing touch that is a continuation of movement of said multi-directional input device (25) and moves toward said at least one button (26 - 29).

2. The electronic device of claim 1, wherein said multi-directional user input device (25) comprises a trackball.

3. The electronic device of claim 1 or claim 2, wherein said touch sensor (30) is disposed under said multi-directional input device (25) and said at least one button (26 - 29).

4. The electronic device of any one of claims 1 to 3, wherein said at least one button (26 - 29) comprises a pair of mechanical buttons on opposite sides of said multi-directional user input device (25).

5. The electronic device of claim 3, wherein said touch sensor (30) comprises a plurality of vertical columnar sensing elements (214) for sensing horizontal touch movement.

6. The electronic device of claim 1 or claim 2, wherein said touch sensor (30) is disposed adjacent and on opposite sides of said multi-directional input device (25).

7. The electronic device of claim 6, wherein said touch sensor (30) comprises said at least one button (26 - 29).

8. The electronic device of claim 1 or claim 2, wherein said touch sensor (30) is disposed between said multi-directional input device (25) and said at least one button (26 -29).

9. The electronic device of claim 1 or claim 2, wherein said touch sensor (30) is one of either a capacitive sensor, a magnetic sensor, an inductive sensor, a reflective photocell, a sonar sensor, an infrared sensor or an optical sensor.

10. The electronic device of any one of claims 1 to 9, wherein said electronic device is a portable electronic device.

11. A method of operating an electronic device (12) having a display (31), a multi-directional input device (25), at least one button (26 - 29) on each of opposite sides of said multi-directional input, a touch sensor (30), and a processor (20), comprising:
displaying an image having dimensions that exceed dimensions of the display;
sensing touch adjacent said multi-directional input device (25) and said at least one button (26 - 29) via said touch sensor (30) and in response generating an output signal; and
receiving said output signal at said processor (20) and scrolling said image in the direction of said at least one button (26 - 29) responsive to said touch sensor (30) sensing touch that is a continuation of movement of said multi-directional input device (25) and moves toward said at least one button (26 - 29).

12. The method as claimed in claim 11, further comprising executing a function via said processor (20) responsive to actuation of said at least one button (26 - 29).

13. The method as claimed in claim 11 or claim 12, further comprising scrolling said image to a distal edge thereof responsive to said touch sensor (30) sensing touch that commences adjacent said multi-directional input device (25) and ends at a distal edge of said at least one button (26 - 29).

14. The method as claimed in any one of claims 11 to 13, further comprising scrolling said image one of either:
i) directly proportional to motion of said touch, such that in the event said touch stops moving said image stops moving and in the event said touch thereafter begins moving again said image also moves again in proportion thereto;
ii) directly proportional to motion of said touch, such that in the event said touch stops moving said image stops moving and in the event said touch thereafter begins moving again within a predetermined period of time said image also moves again in proportion thereto and in the event said touch continues to be sensed but does not thereafter begin moving again within said predetermined period of time then said image also moves again at a constant speed;
iii) at a speed that is proportional to distance between said touch and said multi-directional input device, such that in the event said touch stops moving said image stops moving and in the event said touch thereafter begins moving again said image also moves again at said speed; or
iv) at a speed that is proportional to distance between said touch and said multi-directional input device, such that in the event said touch stops moving said image stops moving and in the event said touch thereafter begins moving again within a predetermined period of time said image also moves again at said speed and in the event said touch continues to be sensed but does not thereafter begin moving again within said predetermined period of time then said image also moves again at said speed.

15. The method as claimed in any one of claims 11 to 14, wherein said continuation of movement comprises at least one of simultaneous movement of said of said multi-directional input device (25) and touch that commences adjacent said multi-directional input device.

## Amended claims

### Amended claims in accordance with Rule 137(2) EPC.

**1.** An electronic device (12) adapted to display an image having dimensions that exceed those of a display (31) of said electronic device, said electronic device comprising:
said display (31);
a multi-directional input device (25) for navigating on said display an image having dimensions exceeding those of the display;
at least one button (26 - 29) on each of opposite sides of said multi-directional input device (25);
a touch sensor (30) for sensing touch adjacent said multi-directional input device and said at least one button and in response generating an output signal; and a processor (20) for receiving said output signal and scrolling said image in the direction of said at least one button (26 - 29) responsive to said touch sensor (30) sensing touch that is a continuation of movement of said multi-directional input device (25) and moves toward said at least one button (26 - 29), and wherein said scrolling is one of either i) at a speed that is proportional to distance between said touch and said multi-directional input device, such that in the event said touch stops moving said image stops moving and in the event said touch thereafter begins moving again said image also moves again at said speed, or ii) at a speed that is proportional to distance between said touch and said multi-directional input device, such that in the event said touch stops moving said image stops moving and in the event said touch thereafter begins moving again within a predetermined period of time said image also moves again at said speed and in the event said touch continues to be sensed but does not thereafter begin moving again within said predetermined period of time then said image also moves again at said speed.

**2.** The electronic device of claim 1, wherein said inulti-directional user input device (25) comprises a trackball.

**3.** The electronic device of claim 1 or claim 2, wherein said touch sensor (30) is disposed under said multi-directional input device (25) and said at least one button (26 - 29).

**4.** The electronic device of any one of claims 1 to 3, wherein said at least one button (26 - 29) comprises a pair of mechanical buttons on opposite sides of said multi-directional user input device (25).

**5.** The electronic device of claim 3, wherein said touch sensor (30) comprises a plurality of vertical columnar sensing elements (214) for sensing horizontal touch movement.

**6.** The electronic device of claim 1 or claim 2, wherein said touch sensor (30) is disposed adjacent and on opposite sides of said multi-directional input device (25).

**7.** The electronic device of claim 6, wherein said touch sensor (30) comprises said at least one button (26 - 29).

**8.** The electronic device of claim 1 or claim 2, wherein said touch sensor (30) is disposed between said multi-directional input device (25) and said at least one button (26 - 29).

**9.** The electronic device of claim 1 or claim 2, wherein said touch sensor (30) is one of either a capacitive sensor, a magnetic sensor, an inductive sensor, a reflective photocell, a sonar sensor, an infrared sensor or an optical sensor.

**10.** The electronic device of any one of claims 1 to 9, wherein said electronic device is a portable electronic device.

**11.** A method of operating an electronic device (12) having a display (31), a multi-directional input device (25), at least one button (26 - 29) on each of opposite sides of said multi-directional input, a touch sensor (30), and a processor (20), comprising:
displaying an image having dimensions that exceed dimensions of the display;
sensing touch adjacent said multi-directional input device (25) and said at least one button (26 - 29) via said touch sensor (30) and in response generating an output signal; and
receiving said output signal at said processor (20) and scrolling said image in the direction of said at least one button (26 - 29) responsive to said touch sensor (30) sensing touch that is a continuation of movement of said multi-directional input device (25) and moves toward said at least one button (26 - 29), and wherein said scrolling is one of either i) at a speed that is proportional to distance between said touch and said multi-directional input device, such that in the event said touch stops moving said image stops moving and in the event said touch thereafter begins moving again said image also moves again at said speed, or ii) at a speed that is proportional to distance between said touch and said multi-directional input device, such that in the event said touch stops moving said image stops moving and in the event said touch thereafter begins moving again within a predetermined period of time said image also moves again at said speed and in the event said touch continues to be sensed but does not thereafter begin moving again within said predetermined period of time then said image also moves again at said speed.

**12.** The method as claimed in claim 11, further comprising executing a function via said processor (20) responsive to actuation of said at least one button (26 - 29).

**13.** The method as claimed in claim 11 or claim 12, further comprising scrolling said image to a distal edge thereof responsive to said touch sensor (30) sensing touch that commences adjacent said multi-directional input device (25) and ends at a distal edge of said at least one button (26 - 29).

**14.** The method as claimed in any one of claims 11 to 13, wherein said continuation of movement comprises at least one of simultaneous movement of said of said multi-directional input device (25) and touch that commences adjacent said multi-directional input device.
